# EUROPEAN PATENT SPECIFICATION

(11) **EP 3 499 613 B1**
(45) Date of publication and mention of the grant of the patent: **19.05.2021**
(21) Application number: 18212291.1
(22) Date of filing: 13.12.2018
(51) Int. Cl.: H01M 4/52, H01M 10/34, H01M 4/02

(54) **NICKEL HYDROGEN SECONDARY BATTERY**
NICKEL-WASSERSTOFF-SEKUNDÄRBATTERIE
BATTERIE SECONDAIRE AU NICKEL-HYDROGÈNE

(30) Priority: 14.12.2017 JP 2017239649
(43) Date of publication of application: 19.06.2019
(73) Proprietor: FDK Corporation, Tokyo 108-8212 (JP)
(72) Inventor: Imoto, Yuzo, Tokyo, 108-8212 (JP); Tanimoto, Yuya, Tokyo, 108-8212 (JP); Yamane, Tetsuya, Tokyo, 108-8212 (JP); Kihara, Masaru, Tokyo, 108-8212 (JP)
(74) Representative: Epping - Hermann - Fischer

(56) References cited:
- EP-A1- 2 551 943
- JP-A- 2011 071 125

## Description

### BACKGROUND OF THE INVENTION

### Field of the Invention

The present invention relates to a nickel hydrogen secondary battery.

### Description of the Related Art

Generally, in electronic devices and the like using secondary batteries as power sources, in order to determine whether the secondary batteries are in the state of being able to normally drive the electronic devices and the like, or in order to determine a suitable timing of switching between discharge and charge of the secondary batteries, the residual capacity of the secondary batteries needs to be detected.

The residual capacity of a battery can be indicated, for example, by a State of Charge (hereinafter, referred to as SOC), which is a proportion, expressed in percentage, of a charged electric quantity to a battery capacity. Here, methods of detecting SOC and eventually the residual capacity of the battery include a method of exploiting a discharge characteristic curve of the battery (see, for example, Japanese Patent Laid-Open No. 11-111348).

Here, a discharge characteristic curve is determined from a relation between the voltage and the discharge time of a battery, or a relation between the voltage and the discharge capacity of the battery when the battery is discharged at a certain current value. By using this discharge characteristic curve, the relation between the voltage and SOC of the battery can be grasped. That is, with the discharge characteristic curve determined previously by some experiment, by detecting the voltage at a certain current value and exploiting the discharge characteristic curve at the current value, SOC and eventually the residual capacity of the battery can be detected.

Specifically, for example, a voltage corresponding to an SOC of 25% (hereinafter, referred to as a reference value VI) and a voltage corresponding to an SOC of 75% (hereinafter, referred to as a reference value V2) are previously determined from a discharge characteristic curve. Then, a measured value of the voltage of the battery is compared with these reference values V1 and V2. When the measured value of the voltage of the battery is nearly the reference value V2, it can be determined that the capacity still sufficiently remains; and when the measured value of the voltage of the battery is nearly the reference value e V1, it can be determined that the capacity is little left. Here, when, for example, SOC = 25% corresponds to the allowable lower limit of the residual capacity of the battery, it is possible to detect, by measuring the voltage of the battery, whether the residual capacity in the discharge last period of the battery has reached the allowable lower limit, that is, SOC = 25%. Thereby, since discharge exceeding this becomes overdischarge, control of terminating discharge and switching to charge can be carried out.

By the way, alkali secondary batteries are known as one type of secondary batteries. Among the alkali secondary batteries, nickel hydrogen secondary batteries, since having a high capacity among the alkali secondary batteries, have come to be used in various applications such as various types of electronic devices and hybrid electric cars.

Also for the nickel hydrogen secondary batteries, it is desired to determine the residual capacity or SOC with good accuracy.

In the case of the above method, basically, with a larger difference between the reference value V1 and the reference value V2, it becomes easier to detect the residual capacity of a battery.

However, conventional nickel hydrogen secondary batteries, when being used for devices, exhibit their voltage stable right before their residual capacity is exhausted. That is, the discharge characteristic curve exhibits nearly a constant voltage from the early period to the last period. Hence, the difference between the reference value V1 and the reference value V2 is relatively small. Therefore, the nickel hydrogen secondary batteries have such a problem that detection of the residual capacity of the batteries based on the measured voltage of the batteries is more difficult than that of other secondary batteries.

The present invention has been achieved based on the above situation, and an object of the present invention is to provide a nickel hydrogen secondary battery for which the detection of the residual capacity can be carried out with good accuracy.

JP 2011 071125 A discloses a manufacturing method of a positive electrode active material for the alkaline storage battery having a cobalt compound layer formation process comprising: sodium hydroxide aqueous solution is supplied into an aqueous solution containing nickel hydroxide particles to keep the pH within 11.5-13.5, and an aqueous solution containing cobalt ion is supplied and then, by supplying air, a cobalt compound layer is formed on the surface of the nickel hydroxide particles.

EP 2 551 943 A1 discloses a nickel hydrogen rechargeable battery having a positive electrode and a negative electrode. The positive electrode includes positive-electrode active material made of nickel hydrogen particles in which magnesium is dissolved, and the negative electrode includes rare earth-Mg-Ni-based hydrogen storage alloy powder. At least either one of the negative electrode and the positive electrode includes at least one selected from a group including zinc and zinc compounds as additive. The content of the additive ranges from 0.2 to 1.5 part by weight per 100 parts by weight of hydrogen storage alloy in the negative electrode, and ranges from 0.3 to 1.5 part by weight per 100 parts by weight of the positive-electrode active material in the positive electrode.

### SUMMARY OF THE INVENTION

The present invention provides a nickel hydrogen secondary battery according to claim 1. Preferred embodiments are set forth in the dependent claims.

In the nickel hydrogen secondary battery according to the present invention, the difference between the voltage in the discharge early period and the voltage in the discharge last period in a discharge characteristic curve can be increased, and the detection of the residual capacity of a battery can easily be carried out. Hence, for the nickel hydrogen secondary battery according to the present invention, the detection of the residual capacity can be carried out with good accuracy.

Thus, the present invention can provide a nickel hydrogen secondary battery for which the detection of the residual capacity can be carried out with good accuracy.

### BRIEF DESCRIPTION OF THE DRAWINGS

FIG. 1 is a perspective view illustrated by partially rupturing a nickel hydrogen secondary battery according to one embodiment of the present invention; and
FIG. 2 is a graph showing charge and discharge characteristics curves of each battery.

### DETAILED DESCRIPTION OF THE PREFERRED EMBODIMENTS

Hereinafter, a nickel hydrogen secondary battery 2 according to the present invention (hereinafter, referred to as battery) will be described by reference to the drawing.

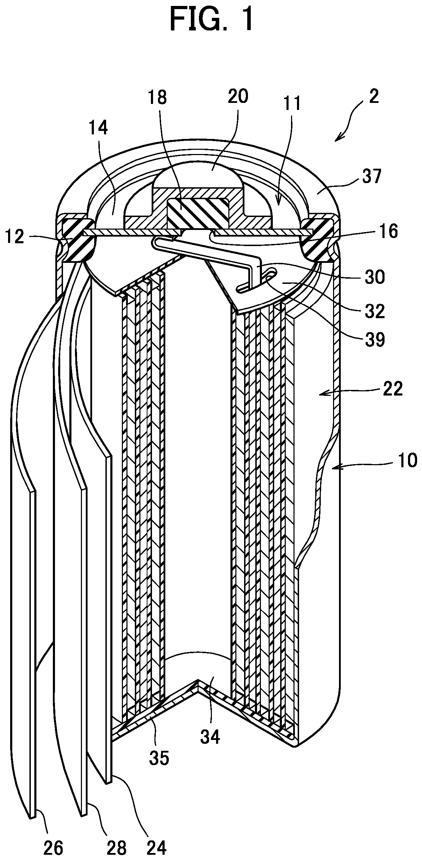

The battery 2 to which the present invention is applied is not especially limited, but the present invention is applied to, for example, an AA-size cylindrical battery 2 illustrated in FIG. 1.

As illustrated in FIG. 1, the battery 2 is equipped with an outer can 10 having an opened upper end and a bottomed cylindrical shape. The outer can 10 has conductivity and a bottom wall 35 thereof functions as a negative electrode terminal. A sealing body 11 is fixed to the opening of the outer can 10. The sealing body 11 contains a lid plate 14 and a positive electrode terminal 20, and seals the outer can 10 and provides the positive electrode terminal 20. The lid plate 14 is a disc-shape member having conductivity. In the opening of the outer can 10, the lid plate 14 and a ring-shape insulating packing 12 surrounding the lid plate 14 are disposed, and the insulating packing 12 is fixed to an opening edge 37 of the outer can 10 by caulking the opening edge 37 of the outer can 10. That is, the lid plate 14 and the insulating packing 12 hermetically block the opening of the outer can 10 in cooperation with each other.

Here, the lid plate 14 has a center through-hole 16, and on the outer surface of the lid plate 14, a rubber-made valve disc 18 plugging up the center through-hole 16 is disposed. Further on the outer surface of the lid plate 14, the metal-made positive electrode terminal 20 which has a cylindrical shape with a flange so as to cover the valve disc 18 is electrically connected. The positive electrode terminal 20 presses the valve disc 18 toward the lid plate 14. Here, the positive electrode terminal 20 has a vent hole opened therein, which is not illustrated.

Usually, the center through-hole 16 is hermetically closed with the valve disc 18. On the other hand, when a gas is evolved in the outer can 10 and the internal pressure thereof rises, the valve disc 18 is compressed by the internal pressure to open the center through-hole 16, and consequently, the gas is released from in the outer can 10 to the outside through the center through-hole 16 and the vent hole (not illustrated) of the positive electrode terminal 20. That is, the center through-hole 16, the valve disc 18 and the positive electrode terminal 20 form a safety valve for the battery.

In the outer can 10, an electrode group 22 is accommodated. The electrode group 22 comprises a strip-form positive electrode 24, a strip-form negative electrode 26 and a strip-form separator 28, and the electrode group 22 is wound in a spiral form in the state that the separator is interposed between the positive electrode 24 and the negative electrode 26. That is, the positive electrode 24 and the negative electrode 26 are mutually stacked through the separator 28. The outermost periphery of the electrode group 22 is formed of a part (outermost peripheral part) of the negative electrode 26, and contacts with the inner peripheral wall of the outer can 10. That is, the negative electrode 26 and the outer can 10 are mutually electrically connected.

In the outer can 10, a positive electrode lead 30 is disposed between one end of the electrode group 22 and the lid plate 14. In detail, one end of the positive electrode lead 30 is connected to the positive electrode 24, and the other end thereof is connected to the lid plate 14. Therefore, the positive electrode terminal 20 and the positive electrode 24 are mutually electrically connected through the positive electrode lead 30 and the lid plate 14. Here, between the lid plate 14 and the electrode group 22, a circular upper insulating member 32 is disposed, and the positive electrode lead 30 extends through a slit 39 installed in the upper insulating member 32. Further, also between the electrode group 22 and the bottom part of the outer can 10, a circular lower insulating member 34 is disposed.

Further, in the outer can 10, a predetermined amount of an alkali electrolyte solution (not illustrated) is injected. The alkali electrolyte solution is impregnated in the electrode group 22 and advances charge and discharge reactions between the positive electrode 24 and the negative electrode 26. As the alkali electrolyte solution, an alkali aqueous solution containing KOH, NaOH and LiOH as solutes is preferably used.

As a material of the separator 28, there can be used, for example, a polyamide fiber-made nonwoven fabric imparted with hydrophilic functional groups, and a polyolefin, such as polyethylene or polypropylene, fiber-made nonwoven fabric imparted with hydrophilic functional groups. Specifically, a nonwoven fabric containing mainly polyolefin fibers having been subjected to a sulfonation treatment and being imparted with sulfone groups is preferably used. Here, the sulfone groups are imparted by using an acid containing sulfate groups such as sulfuric acid or fuming sulfuric acid and treating the nonwoven fabric. A battery using a separator containing such fibers having sulfone groups exhibits an excellent self-discharge characteristic.

The positive electrode 24 comprises a conductive positive electrode substrate having a porous structure, and a positive electrode mixture held in pores of the positive electrode substrate.

As such a positive electrode substrate, for example, a net-like, spongy or fibrous nickel-plated metallic body, or a nickel foam can be used.

The positive electrode mixture comprises a positive electrode active substance, a conductive material, a positive electrode additive and a binder. The binder functions to mutually bind the positive electrode active substance, the conductive material and the positive electrode additive and to bind the positive electrode mixture to the positive electrode substrate. Here, as the binder, for example, a carboxymethylcellulose, a methylcellulose, a PTFE (polytetrafluoroethylene) dispersion, or an HPC (hydroxypropylcellulose) dispersion can be used.

The positive electrode active substance as defined in claim 1 comprises a first positive electrode active substance and a second positive electrode active substance. These first positive electrode active substance and second positive electrode active substance contain nickel hydroxide as a main component. Then, the first positive electrode active substance and the second positive electrode active substance differ in the amount of magnesium solid-dissolved.

It is preferable because the conductivity is improved that the nickel hydroxide constituting the positive electrode active substance be an order-heightened nickel hydroxide. According to the present invention, "containing nickel hydroxide as a main component" refers to that the content of nickel hydroxide in the first positive electrode active substance exceeds 50% by mass, and similarly refers to that the content of nickel hydroxide in the second positive electrode active substance exceeds 50% by mass.

The first positive electrode active substance has at least magnesium solid-dissolved. On the other hand, the second positive electrode active substance does not necessarily need to have magnesium solid-dissolved, but in the case of having magnesium solid-dissolved therein, the amount of magnesium solid-dissolved therein is smaller than the amount of magnesium solid-dissolved in the first positive electrode active substance. Then in the present invention, forms in which the amounts of magnesium solid-dissolved are different also include a form in which the first positive electrode active substance has magnesium solid-dissolved and the second positive electrode active substance has magnesium not solid-dissolved at all.

By solid-dissolving magnesium in nickel hydroxide, the equilibrium potential of the nickel hydroxide rises. Since the amount of magnesium solid-dissolved and the equilibrium potential correlate with each other, by mixing active substances differing in the amount of magnesium solid-dissolved, variations in the discharge curve occur. In particular, since active substances having higher equilibrium potentials discharge earlier, by making the amounts of magnesium different, variations in the discharge curve can be made.

In the first positive electrode active substance and the second positive electrode active substance, it is preferable to solid-dissolve at least one of zinc and cobalt, in addition to magnesium, as elements to be solid-dissolved in nickel hydroxide.

Here, zinc suppresses swelling of the positive electrode accompanying charge and discharge of the positive electrode, and prevents exhaustion of the electrolyte solution. Further cobalt has the effect of securing the conductivity of the nickel hydroxide.

As the conductive material, for example, one or two or more selected from cobalt compounds and cobalt (Co) can be used. The cobalt compounds include cobalt oxide (CoO) and cobalt hydroxide (Co(OH)₂). The conductive material, as required, is added to the positive electrode mixture, and as forms of the conductive material to be added, in addition to a powdery form, the conductive material may be contained in a form of a coating covering the surface of the positive electrode active substance in the positive electrode mixture. Preferably, a form is adopted in which a layer of cobalt hydroxide is formed on the surface of particles of the positive electrode active substance and the layer of cobalt hydroxide is oxidized to thereby provide a conductive layer of cobalt oxyhydroxide having a high conductivity. Further it is more preferable to provide a conductive layer of cobalt oxyhydroxide containing sodium. When sodium is contained in the cobalt oxyhydroxide, the conductivity is largely improved. Hence, the incorporation of sodium attains the effect of largely improving the utilization factor of the nickel hydroxide.

The positive electrode additive is added for improving characteristics of the positive electrode, and for example, yttrium oxide or zinc oxide can be used.

The first positive electrode active substance can be produced, for example, as follows.

First, nickel sulfate and magnesium sulfate weighed so as to provide a predetermined composition are placed in a predetermined amount of water to thereby prepare a first mixed aqueous solution of nickel sulfate and magnesium sulfate. Then, while the first mixed aqueous solution is being stirred, a sodium hydroxide aqueous solution is slowly added to the first mixed aqueous solution and allowed to react to thereby cause particles containing nickel hydroxide as a main component and having magnesium solid-dissolved to deposit. The first positive electrode active substance can thus be obtained.

Here, when the amount of magnesium solid-dissolved in the first positive electrode active substance is 2.0% by mass or larger, the discharge characteristic curve of an obtained battery becomes a shape in which the gradient varies in the discharge last period, and the effect of detecting SOC and eventually the residual capacity with good accuracy from the voltage of the battery is attained. With the amount of magnesium solid-dissolved being smaller than 2.0% by mass, however, it becomes difficult to satisfactorily attain such an effect. Hence, the amount of magnesium solid-dissolved is adjusted to 2.0% by mass or larger, and preferably 2.48% by mass or larger.

On the other hand, with the amount of magnesium solid-dissolved being larger than 5.0% by mass, accompanying by that, the purity of nickel in the nickel hydroxide decreases and the capacity decreases. Further the particle diameter of the nickel hydroxide is liable to become small and the cycle operating life characteristic lowers. Additionally, since the equilibrium potential rises, and consequently, the difference from the oxygen evolution potential becomes small, the charge acceptance at high temperatures lowers. Hence, the amount of magnesium solid-dissolved is adjusted to 5.0% by mass or smaller. It is preferable to adjust the amount of magnesium solid-dissolved to 4.05% by mass or smaller.

Then in the case of solid-dissolving zinc and cobalt in the first positive electrode active substance, zinc sulfate and cobalt sulfate weighed so as to provide a predetermined composition are further added to thereby prepare a first mixed aqueous solution; and a sodium hydroxide aqueous solution is slowly added to the first mixed aqueous solution and allowed to react to thereby cause particles of a first positive electrode active substance containing nickel hydroxide as a main component and having magnesium, zinc and cobalt solid-dissolved to deposit.

The second positive electrode active substance can be produced, for example, as follows.

First, an aqueous solution of nickel sulfate is prepared. A sodium hydroxide aqueous solution was slowly added to the nickel sulfate aqueous solution and allowed to react to thereby cause particles of nickel hydroxide to deposit. Particles of a second positive electrode active substance can thus be obtained. Here in the case of solid-dissolving zinc, magnesium and cobalt in particles of a second positive electrode active substance, nickel sulfate, magnesium sulfate, zinc sulfate and cobalt sulfate are weighed so as to provide a predetermined composition to thereby prepare a second mixed aqueous solution. While the second mixed aqueous solution is being stirred, a sodium hydroxide aqueous solution is slowly added to the second mixed aqueous solution and allowed to react to thereby cause particles of a second positive electrode active substance containing nickel hydroxide as a main component and having magnesium, zinc and cobalt solid-dissolved to deposit. According to the present invention, in the case of solid-dissolving magnesium in the second positive electrode active substance, the amount of magnesium solid-dissolved in the second positive electrode active substance is set at a smaller amount than that in the first positive electrode active substance. That is, according to the present invention a relation of A > B ≥ 0 is satisfied, where A represents the amount of magnesium by mass solid-dissolved in the first positive electrode active substance, and B represents the amount of magnesium by mass solid-dissolved in the second positive electrode active substance. Here, the second positive electrode active substance is allowed to have also a form of having an amount of magnesium solid-dissolved of 0 and containing no magnesium at all.

An aggregate of the particles of the first positive electrode active substance and an aggregate of the particles of the second positive electrode active substance obtained as described above are mixed together to thereby obtain a positive electrode active substance powder being an aggregate of positive electrode active substance particles.

According to the present invention, the positive electrode active substance powder, is provided in a form in which the amount of the particles of the first positive electrode active substance by mass is larger than the amount of the particles of the second positive electrode active substance by mass. This is because when the amount of the first positive electrode active substance by mass, which contains more of magnesium by mass than the second positive electrode active substance, is smaller than the amount of the second positive electrode active substance by mass, it becomes difficult for the discharge characteristic curve of an obtained battery to assume a shape thereof in which the gradient in the discharge last period varies.

The positive electrode 24 can be produced, for example, as follows.

The conductive material, the positive electrode additive, water and the binder are added to the positive electrode active substance powder being an aggregate of the positive electrode active substance particles obtained as described above, and kneaded to thereby prepare a positive electrode mixture slurry. The obtained positive electrode mixture slurry is filled, for example, in a nickel foam, and dried. After the drying, the nickel foam filled with nickel hydroxide particles and the like is rolled and then cut to thereby obtain the positive electrode 24 carrying the positive electrode mixture.

Then, the negative electrode 26 will be described.

The negative electrode 26 has a strip-form conductive negative electrode substrate (core), and a negative electrode mixture is held on the negative electrode substrate.

The negative electrode substrate is a sheet-form metal material having through-holes distributed thereon, and for example, a punching metal sheet or a sintered substrate obtained by molding and sintering a metal powder can be used. The negative electrode mixture is not only filled in the through-holes of the negative electrode substrate, but also held in a layer form on both surfaces of the negative electrode substrate.

The negative electrode mixture contains a hydrogen absorbing alloy particle capable of absorbing and releasing hydrogen as a negative electrode active substance, a conductive material, and a binder. The binder functions to mutually bind particles of the hydrogen absorbing alloy, a negative electrode additive, and the conductive material, and simultaneously to bind the negative electrode mixture to the negative electrode substrate. Here, as the binder, a hydrophilic or hydrophobic polymer or the like can be used. As the conductive material, carbon black or graphite can be used. As required, a negative electrode additive may be added.

The hydrogen absorbing alloy in the hydrogen absorbing alloy particles is not especially limited, and one used for common nickel hydrogen secondary batteries is used.

Then, the above-mentioned hydrogen absorbing alloy particle is obtained, for example, as follows.

First, metal raw materials are weighed so as to provide a predetermined composition, and mixed; and the mixture is melted, for example, by an induction melting furnace, and thereafter cooled to thereby make an ingot. The obtained ingot is subjected to a heat treatment in an inert gas atmosphere at 900 to 1,200°C for 5 to 24 hours. Thereafter, the ingot cooled to room temperature is crushed and sieved to thereby obtain particles of the hydrogen absorbing alloy having a desired particle diameter.

Then, the negative electrode 26 can be produced, for example, as follows.

A hydrogen absorbing alloy powder being an aggregate of the hydrogen absorbing alloy particles, the conductive material, the binder and water are kneaded to thereby prepare a negative electrode mixture paste. The obtained negative electrode mixture paste is coated on the negative electrode substrate, and dried. After the drying, the negative electrode substrate having the hydrogen absorbing alloy particles and the like adhered thereon is rolled and cut. The negative electrode 26 is thus fabricated.

The positive electrode 24 and the negative electrode 26 fabricated as described above are wound in a spiral form in the state that the separator 28 is interposed therebetween to thereby form the electrode group 22.

The electrode group 22 thus obtained is accommodated in the outer can 10. Then, the alkali electrolyte solution is injected in a predetermined amount in the outer can 10. Thereafter, the outer can 10 accommodating the electrode group 22 and the alkali electrolyte solution is sealed with the lid plate 14 equipped with the positive electrode terminal 20 to thereby obtain the battery 2 according to the present invention. The obtained battery 2 is subjected to an initial activation treatment and thereby brought into a usable state.

### [Examples]

### 1. Production of batteries

### (Example 1)

### (1) Fabrication of a hydrogen absorbing alloy and a negative electrode

A rare earth component containing 20% by mass of La and 80% by mass of Sm was prepared. The obtained rare earth component, Mg, Ni and Al were weighed to thereby prepare a mixture having these components having proportions thereof in molar ratio of 0.99 : 0.01 : 3.25 : 0.25. The obtained mixture was melted in an induction melting furnace; and the molten metal was poured in a mold and thereafter cooled to room temperature to thereby make an ingot of a hydrogen absorbing alloy. For a sample extracted from the ingot, a compositional analysis using a high-frequency inductively coupled plasma spectroscopy (ICP) was carried out. As a result, the composition of the hydrogen absorbing alloy was (La_{0.20}Sm_{0.80})_{0.99}Mg_{0.01}Ni_{3.25}Al_{0.25}.

Then, the ingot was subjected to a heat treatment in an argon gas atmosphere at a temperature of 1,000°C for 10 hours. Then after the heat treatment, the ingot of the hydrogen absorbing alloy cooled to room temperature was mechanically crushed in an argon gas atmosphere to thereby obtain a hydrogen absorbing alloy powder being an aggregate of hydrogen absorbing alloy particles. Here, for the obtained hydrogen absorbing alloy powder, the particle size of the particles was measured by a laser diffraction scattering-type particle size distribution analyzer; as a result, the volume-average particle diameter (MV) of the hydrogen absorbing alloy particles was 60 µm.

To 100 parts by mass of the obtained powder of the hydrogen absorbing alloy, 0.4 parts by mass of a sodium polyacrylate, 0.1 parts by mass of a carboxymethylcellulose, 1.0 part by mass of a dispersion of a styrene butadiene rubber (SBR), 1.0 part by mass of a carbon black and 30 parts by mass of water were added, and the mixture was kneaded to thereby prepare a paste of a negative electrode mixture.

The paste of the negative electrode mixture was coated uniformly so the thickness as to become constant on both surfaces of an iron-made perforated plate as a negative electrode substrate. The perforated plate had a thickness of 60 µm, and was plated with nickel on its surfaces.

After the paste was dried, the perforated plate on which the hydrogen absorbing alloy powder adhered was rolled to raise the amount of the alloy per volume, and thereafter, cut to thereby obtain a negative electrode 26 for an AA-size.

### (2) Fabrication of a positive electrode active substance (first positive electrode active substance particle, second positive electrode active substance particle) and a positive electrode.

### (i) Fabrication of first positive electrode active substance particles

Nickel sulfate, zinc sulfate, magnesium sulfate and cobalt sulfate were weighed so as to become, based on nickel, 4.0% by mass of zinc, 2.48% by mass of magnesium and 1.0% by mass of cobalt; and these were added to a 1N sodium hydroxide aqueous solution containing ammonium ions to thereby prepare a first mixed aqueous solution. While the obtained first mixed aqueous solution was being stirred, a 10N sodium hydroxide aqueous solution was slowly added and allowed to react in the first mixed aqueous solution while the pH was stabilized at 13 to 14 during the reaction to thereby produce base particles containing nickel hydroxide as a main component and having zinc, magnesium and cobalt solid-dissolved.

Then, the obtained base particles were placed in an ammonia aqueous solution; a cobalt sulfate aqueous solution was added to the ammonia aqueous solution and allowed to react while the pH was maintained at 9 to 10 during the reaction. Thereby, cobalt hydroxide deposited on the surface of the base particles to thereby obtain intermediate particles having a cobalt hydroxide layer of about 0.1 µm in thickness. Then, the intermediate particles were placed in a reaction vessel, and convected in a high-temperature (80°C) air containing oxygen in the reaction vessel. Then, a 12N sodium hydroxide aqueous solution was sprayed in the reaction vessel, and the resultant was subjected to a heat treatment for 45 min. Thereby, the cobalt hydroxide on the surface of the intermediate particles became a highly conductive cobalt oxyhydroxide, and sodium was incorporated in the cobalt oxyhydroxide layer, to thus form a conductive layer containing cobalt oxyhydroxide containing sodium. Thereafter, the intermediate particles having such a cobalt oxyhydroxide layer were filtered, washed with pure water in an amount 10 times the amount of the intermediate particles, thereafter dehydrated, and dried in a 60°C environment. Thereby, there were obtained first positive electrode active substance particles having a conductive layer containing cobalt oxyhydroxide on the surface of the base particles. Here, as a result of measurement of the particle diameter of a first positive electrode active substance powder being an aggregate of the obtained first positive electrode active substance particles by using a laser diffraction scattering-type particle size distribution analyzer, the volume-average particle diameter (MV) of the first positive electrode active substance particles was 10 µm.

### (ii) Fabrication of second positive electrode active substance particles

Nickel sulfate, zinc sulfate and cobalt sulfate were weighed so as to become, based on nickel, 4.0% by mass of zinc and 1.0% by mass of cobalt; and these were added to a 1N sodium hydroxide aqueous solution containing ammonium ions to thereby prepare a second mixed aqueous solution. While the obtained second mixed aqueous solution was being stirred, a 10N sodium hydroxide aqueous solution was slowly added and allowed to react in the second mixed aqueous solution while the pH was stabilized at 13 to 14 during the reaction to thereby produce base particles containing nickel hydroxide as a main component and having zinc and cobalt solid-dissolved.

Then, the obtained base particles were placed in an ammonia aqueous solution; a cobalt sulfate aqueous solution was added to the ammonia aqueous solution and allowed to react while the pH was maintained at 9 to 10 during the reaction. Thereby, cobalt hydroxide deposited on the surface of the base particles to thereby obtain intermediate particles having a cobalt hydroxide layer of about 0.1 µm in thickness. Then, the intermediate particles were placed in a reaction vessel, and convected in a high-temperature (80°C) air containing oxygen in the reaction vessel. Then, a 12N sodium hydroxide aqueous solution was sprayed in the reaction vessel, and the resultant was subjected to a heat treatment for 45 min. Thereby, the cobalt hydroxide on the surface of the intermediate particles became a highly conductive cobalt oxyhydroxide, and sodium was incorporated in the cobalt oxyhydroxide layer, to thus form a conductive layer containing cobalt oxyhydroxide containing sodium. Thereafter, the intermediate particles having such a cobalt oxyhydroxide layer were filtered, washed with pure water in an amount 10 times the amount of the intermediate particles, thereafter dehydrated, and dried in a 60°C environment. Thereby, there were obtained second positive electrode active substance particles having a conductive layer containing cobalt oxyhydroxide on the surface of the base particles. Here, as a result of measurement of the particle diameter of a second positive electrode active substance powder being an aggregate of the obtained second positive electrode active substance particles by using a laser diffraction scattering-type particle size distribution analyzer, the volume-average particle diameter (MV) of the second positive electrode active substance particles was 10 µm.

### (iii) Fabrication of a positive electrode

Then, 95 parts by mass of the first positive electrode active substance powder and 5 parts by mass of the second positive electrode active substance powder were mixed to thereby obtain a positive electrode active substance powder. The obtained positive electrode active substance powder was mixed with 0.3 parts by mass of yttrium oxide, 0.6 parts by mass of niobium oxide, 0.2 parts by mass of an HPC (hydroxypropylcellulose), 0.2 parts by mass of a PTFE dispersion liquid and 30 parts by mass of water to thereby prepare a positive electrode mixture slurry; and the positive electrode mixture slurry was filled in a sheet-form nickel foam as a positive electrode substrate. The nickel foam filled with the positive electrode mixture slurry was dried, and thereafter rolled and cut into a predetermined shape to thereby obtain a positive electrode 24 for an AA-size.

### (3) Assembly of a nickel hydrogen secondary battery

The positive electrode 24 and the negative electrode 26 obtained were wound in a spiral form in the state of a separator 28 being interposed therebetween to thereby fabricate an electrode group 22. The separator 28 used for the fabrication of the electrode group 22 was a polypropylene fiber-made nonwoven fabric having been subjected to a sulfonation treatment, and had a thickness of 0.1 mm (basis weight: 53 g/m²).

Then, an alkali electrolyte solution, an aqueous solution containing KOH, NaOH and LiOH was provided. The alkali electrolyte solution contained KOH, NaOH and LiOH in a ratio of KOH : NaOH : LiOH = 0.8 : 7.0 : 0.02.

Then, the electrode group 22 was accommodated in a bottomed cylindrical outer can 10, and the provided alkali electrolyte solution in a predetermined amount was injected. Thereafter, an opening of the outer can 10 was closed with a sealing body 11 to thereby assemble a rated capacity-2,000 mAh AA-size nickel hydrogen secondary battery 2. Here, the rated capacity was defined by a discharge capacity of a battery when the battery was charged in an environment of a temperature of 25°C at 0.2C for 16 hours, and thereafter discharged at 0.4C until the battery voltage became 1.0 V.

### (4) Initial activation treatment

The battery 2 was subjected to an initial activation treatment by repeating five times such a charge and discharge operation that the battery 2 was charged in an environment of a temperature of 25°C at 0.2C for 16 hours, and thereafter discharged at 0.4C until the battery voltage became 1.0 V. The battery 2 was thus brought into a usable state.

### (Example 2)

A nickel hydrogen secondary battery was assembled as in Example 1, except for adjusting the amount of magnesium contained in first positive electrode active substance particles to 3.62% by mass based on nickel contained therein.

### (Example 3)

A nickel hydrogen secondary battery was assembled as in Example 1, except for adjusting the amount of magnesium contained in first positive electrode active substance particles to 4.05% by mass based on nickel contained therein.

### (Comparative Example 1)

A nickel hydrogen secondary battery was assembled as in Example 1, except for adjusting the amount of magnesium contained in first positive electrode active substance particles to 0% by mass based on nickel contained therein (that is, except that magnesium was not contained in the first positive electrode active substance particles).

Here, Table 1 shows the whole amount of the first positive electrode active substance, the amount of magnesium contained in the first positive electrode active substance, the whole amount of the second positive electrode active substance, the amount of magnesium contained in the second positive electrode active substance, and the capacity per unit mass of the positive electrode, in Examples 1 to 3 and Comparative Example 1.

**[Table 1]**

| | First Positive Electrode Active Substance | | Second Positive Electrode Active Substance | | Capacity per Unit Mass of Positive Electrode [mAh/g] |
|---|---|---|---|---|---|
| | Whole amount [parts by mass] | Amount of Mg [% by mass] | Whole amount [parts by mass] | Amount of Mg [% by mass] | |
| Example 1 | 95 | 2.48 | 5 | 0 | 234 |
| Example 2 | 95 | 3.62 | 5 | 0 | 222 |
| Example 3 | 95 | 4.05 | 5 | 0 | 222 |
| Comparative Example 1 | 95 | 0 | 5 | 0 | 245 |

### 2. Evaluation of the nickel hydrogen secondary batteries

### (1) Charge and discharge characteristics

The batteries having been subjected to the initial activation treatment in Examples 1 to 3 and Comparative Example 1 were each charged in an environment of 25°C at 0.1C for 720 min, and thereafter allowed to stand for 60 min.

The batteries were each discharged in the same environment at 0.2C until the battery voltage became 1.0 V.

In the course of the above-mentioned charge, the relation between the voltage and the charge time of the batteries each was determined and the charge characteristic curve of the each battery was determined.

In the course of the above-mentioned discharge, the relation between the voltage and the discharge time of the batteries each was determined and the discharge characteristic curve of the each battery was determined.

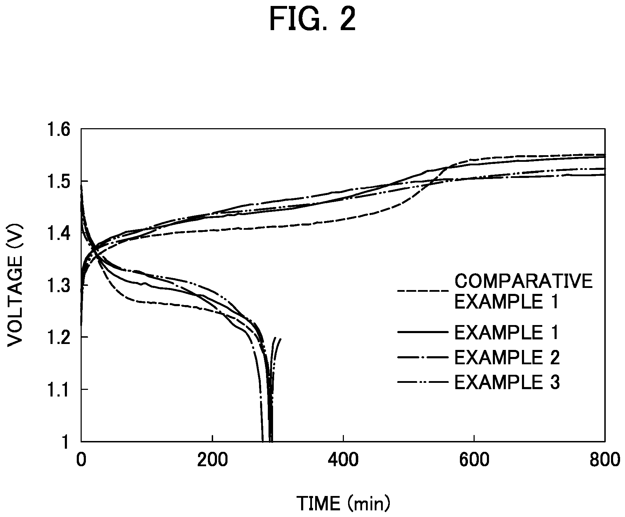

From the obtained results, the charge and discharge characteristics curves of Examples 1 to 3 and Comparative Example 1 are shown in FIG. 2. In FIG. 2, curves rising in the voltage value with the passage of time indicate charge characteristic curves; and curves lowering in the voltage value with the passage of time indicate discharge characteristic curves.

### (2) Consideration

(i) The battery of Comparative Example 1, in which magnesium was not solid-dissolved in the positive electrode active substance, corresponds to conventional nickel hydrogen secondary batteries, and assumes a shape of its discharge characteristic curve being nearly flat between the discharge early period, for example, 50 min of discharge time and the discharge last period, for example, 250 min of discharge time. Hence, the difference in voltage value between the discharge early period and the discharge last period is small, and it is then difficult to detect SOC from the voltage of the battery.
(ii) By contrast, the discharge characteristic curves of the batteries of Examples 1 to 3, in which magnesium was solid-dissolved in their positive electrode active substance, have not so flat portions as the discharge characteristic curve of Comparative Example 1, and have shapes different from the discharge characteristic curve of Comparative Example 1. Hence, it can be said that the detection of SOC for the batteries of Examples 1 to 3 can be carried out easier than that for the battery of Comparative Example 1.
(iii) It can be confirmed that the gradients of the discharge characteristic curves of Examples 1 to 3 vary in their last period. Hence, the difference in voltage value between the discharge early period and the discharge last period becomes relatively large, and the detection of SOC from the voltage of the batteries can easily be carried out. In particular, since the battery of Example 3, in which 4.05% by mass of magnesium was solid-dissolved in the first positive electrode active substance, exhibits a higher operating voltage than the battery of Comparative Example 1, and moreover, the shape of the discharge characteristic curve has a step in the discharge last period, it is easier to detect SOC. Further, the capacity per unit mass of the positive electrode of Example 1 is 234 mAh/g and those of the positive electrodes of Examples 2 and 3 are 222 mAh/g; so, these positive electrodes secure a capacity of 91% to 96% based on the capacity per unit mass (245 mAh/g) of Comparative Example 1, and cause no large capacity reduction. Therefore, it can be said that the batteries according to Examples 1 to 3 can be used satisfactorily.
(iv) From the above, it can be said that it is preferable that the amount of magnesium solid-dissolved in the first positive electrode active substance be adjusted to 2.48% by mass or larger, because the variation in the shape of the discharge characteristic curve becomes remarkable. Then since a larger amount of magnesium solid-dissolved brings about a larger variation in the shape of the discharge characteristic curve, a larger amount of magnesium solid-dissolved is preferable. When the amount of magnesium in the positive electrode active substance is increased, however, the amount of nickel hydroxide is reduced along therewith. As a result, the positive electrode capacity decreases. Additionally, since the equilibrium potential rises, the difference from the oxygen evolution potential becomes small and the charge acceptance at high temperatures decreases. Such disadvantages, when the amount of magnesium solid-dissolved exceeds 5.0% by mass, become remarkable. Hence, in order to suppress the degrees of the above-mentioned disadvantages low and simultaneously make the variation in the shape of the discharge characteristic curve to be satisfactorily large, it is preferable that the amount of magnesium solid-dissolved in the first positive electrode active substance be adjusted to 4.05% by mass or smaller.
(v) From the above, it can be said that according to the present invention, a nickel hydrogen secondary battery for which the detection of SOC of the battery and eventually the residual capacity of the battery can easily be carried out can be obtained.

In the above-mentioned embodiments and Examples, a form containing two positive electrode active substances of a first positive electrode active substance and a second positive electrode active substance differing in the amount of magnesium solid-dissolved has been described, but the present invention is not limited to this form, and it is allowed to adopt a form containing two or more positive electrode active substances differing the amount of magnesium solid-dissolved. Further the nickel hydrogen secondary battery according to the present invention may be a rectangular battery, and the shape thereof is not any more limited.

## Claims

1. A nickel hydrogen secondary battery (2), comprising: a container (10); and an electrode group (22) accommodated together with an alkali electrolyte solution in the container (10), **characterized in that**:
the electrode group (22) has a positive electrode (24) and a negative electrode (26) stacked through a separator (28) ;
the positive electrode (24) comprises two or more positive electrode active substances having different compositions; and
the positive electrode active substances each comprise nickel hydroxide as a main component, wherein the content of nickel hydroxide in each positive electrode active substance exceeds 50% by mass, and mutually differ in an amount of magnesium by mass solid-dissolved,
wherein the positive electrode active substances comprise a first positive electrode active substance and a second positive electrode active substance; and
a relation of A > B ≥ 0 is satisfied, where A represents an amount of magnesium by mass solid-dissolved in the first positive electrode active substance, and B represents an amount of magnesium by mass solid-dissolved in the second positive electrode active substance, and where A is 2.0% by mass or larger and 5.0% by mass or smaller,
**characterized in that**:
the first positive electrode active substance is contained in a larger amount by mass than the second positive electrode active substance.

2. The nickel hydrogen secondary battery (2) according to claim 1, **characterized in that** the A is 2.48% by mass or larger and 4.05% by mass or smaller.

3. The nickel hydrogen secondary battery (2) according to claim 1 or 2, **characterized in that**:
the B is 0% by mass.

## Patentansprüche

1. Nickel-Wasserstoff-Sekundärbatterie (2), umfassend:
einen Behälter (10); und eine Elektrodengruppe (22), die zusammen mit einer Alkalielektrolytlösung in dem Behälter (10) untergebracht ist, **dadurch gekennzeichnet, dass**:
die Elektrodengruppe (22) eine positive Elektrode (24) und eine negative Elektrode (26) hat, die durch einen Separator (28) gestapelt sind;
die positive Elektrode (24) zwei oder mehr Positivelektrodenwirkstoffe mit unterschiedlichen Zusammensetzungen umfasst; und
die Positivelektrodenwirkstoffe jeweils Nickelhydroxid als Hauptbestandteil umfassen, wobei der Gehalt an Nickelhydroxid in jedem Positivelektrodenwirkstoff 50 Masse-% übersteigt und sich gegenseitig in einer Menge an Magnesium in Masse gelösten Feststoffs unterscheiden,
wobei die Positivelektrodenwirkstoffe einen ersten Positivelektrodenwirkstoff und einen zweiten Positivelektrodenwirkstoff umfassen; und
ein Verhältnis von A > B ≥ 0 erfüllt ist, worin A eine Menge an Magnesium in Masse gelösten Feststoffs in dem ersten Positivelektrodenwirkstoff darstellt, und B eine Menge an Magnesium in Masse gelösten Feststoffs in dem zweiten Positivelektrodenwirkstoff darstellt, und worin A 2,0 Masse-% oder mehr und 5,0 Masse-% oder weniger beträgt,
**dadurch gekennzeichnet, dass**:
der erste Positivelektrodenwirkstoff in einer größeren Menge in Masse enthalten ist als der zweite
Positivelektrodenwirkstoff.

2. Nickel-Wasserstoff-Sekundärbatterie (2) nach Anspruch 1, **dadurch gekennzeichnet, dass** A 2,48 Masse-% oder mehr und 4,05 Masse-% oder weniger beträgt.

3. Nickel-Wasserstoff-Sekundärbatterie (2) nach Anspruch 1 oder 2, **dadurch gekennzeichnet, dass**: B 0 Masse-% beträgt.

## Revendications

1. Batterie secondaire au nickel-hydrogène (2),
comprenant : un contenant (10) ; et un groupe d'électrodes (22) logé conjointement avec une solution d'électrolyte alcalin dans le contenant (10), **caractérisée en ce que** :
le groupe d'électrodes (22) comporte une électrode positive (24) et une électrode négative (26) empilées via un séparateur (28) ;
l'électrode positive (24) comprend deux ou plus de deux substances actives d'électrode positive ayant des compositions différentes ; et
les substances actives d'électrode positive comprennent chacune de l'hydroxyde de nickel comme composant principal, sachant que la teneur en hydroxyde de nickel dans chaque substance active d'électrode positive excède 50 % en masse, et diffèrent mutuellement en termes de quantité de magnésium en masse solide dissoute,
sachant que les substances actives d'électrode positive comprennent une première substance active d'électrode positive et une deuxième substance active d'électrode positive ; et
une relation de A > B ≥ 0 est satisfaite, où A représente une quantité de magnésium en masse solide dissoute dans la première substance active d'électrode positive, et B représente une quantité de magnésium en masse solide dissoute dans la deuxième substance active d'électrode positive, et où A est de 2,0 % en masse ou plus et de 5,0 % en masse ou moins,
**caractérisée en ce que**
la première substance active d'électrode positive est contenue dans une plus grande quantité en masse que la deuxième substance active d'électrode positive.

2. La batterie secondaire au nickel-hydrogène (2) selon la revendication 1, **caractérisée en ce que** le A est de 2,48 % en masse ou plus et de 4,05 % en masse ou moins.

3. La batterie secondaire au nickel-hydrogène (2) selon la revendication 1 ou 2, **caractérisée en ce que** :
le B est de 0 % en masse.
